# EUROPÄISCHE PATENTSCHRIFT

(11) **EP 1 465 301 B1**
(45) Veröffentlichungstag und Bekanntmachung des Hinweises auf die Patenterteilung: **12.12.2007**
(21) Anmeldenummer: 03007846.3
(22) Anmeldetag: 05.04.2003
(51) Int. Cl.: H01S 3/034, H01S 3/036

(54) **Gaslaserresonator**
Gas laser resonator
Résonateur d'un laser à gas

(43) Veröffentlichungstag der Anmeldung: 06.10.2004
(73) Patentinhaber: TRUMPF LASERTECHNIK GmbH, D-71254 Ditzingen (DE)
(72) Erfinder: von Borstel, Michael, Dr., 74385 Pleidelsheim (DE); Thierfelder, Silke, 71254 Ditzingen (DE)
(74) Vertreter: Kohler Schmid Möbus

(56) Entgegenhaltungen:
- EP-A- 0 595 335
- WO-A-98/19373
- US-A- 5 373 523
- US-A- 6 069 909
- PATENT ABSTRACTS OF JAPAN vol. 012, no. 351 (E-660), 20. September 1988 (1988-09-20) -& JP 63 108786 A (HITACHI LTD), 13. Mai 1988 (1988-05-13)

## Beschreibung

Die vorliegende Erfindung betrifft einen Gaslaserresonator nach dem Oberbegriff von Anspruch 1 mit wenigstens einem von Lasergas durchströmten Laserrohr, mit wenigstens einer in das Laserrohr mündenden Zufuhrleitung für das Lasergas und mit wenigstens einem endseitig des Laserrohrs angeordneten Resonatorspiegel.

Ein derartiger Gaslaserresonator ist beispielsweise durch die EP 0 935 831 B1 bekannt geworden. Ähnliche Laser sind aus EP 0595335, JP 363108786 und WO 9819373 bekannt.

Um die Resonatorspiegel eines Gaslaserresonators vor Verschmutzungen zu schützen, wird versucht, Verunreinigungen im Lasergas zu vermeiden. Wenn jedoch durch fehlerhafte Bauteile oder Fehler bei Service- und Wartungsarbeiten trotzdem Partikel entstanden, so konnten diese Partikel die Resonatorspiegel verschmutzen. Im Bereich der Verschmutzungen wird die auftreffende Laserstrahlung verstärkt absorbiert, und der Resonatorspiegel erwärmt sich. Dies führt zu einem Leistungsverlust und eventuell einer Veränderung der Leistungsdichteverteilung des Laserstrahls. Außerdem kann der Resonatorspiegel beschädigt und im Extremfall zerstört werden.

Das Lasergas wird, wie bei dem Gaslaserresonator der eingangs genannten EP 0 935 831 B1, so in die Laserrohre eingeleitet, dass die Hauptgasströmungen jeweils von den Resonatorspiegeln weggerichtet sind. Allerdings lassen sich Rückgasströmungen in Richtung auf die Resonatorspiegel nicht ganz vermeiden, da für einen optimalen Laserbetrieb eine stark verwirbelte Strömung im Laserrohr vorteilhaft ist. Es besteht also einerseits das Bedürfnis nach viel Wirbel und hohen Geschwindigkeiten im Laserrohr und andererseits möglichst stehendem Gas im Bereich der Resonatorspiegel.

Aufgabe der vorliegenden Erfindung ist es daher, einen Gaslaserresonator der eingangs genannten Art derart weiterzubilden, dass die Resonatorspiegel noch wirksamer vor Verschmutzungen geschützt sind.

Diese Aufgabe wird erfindungsgemäß dadurch gelöst, dass im Laserrohr zwischen Resonatorspiegel und Zufuhrleitung eine Lochblende angeordnet ist. Vorzugsweise ist die Hauptgasströmung des in das Laserrohr zugeströmten Lasergases im Laserrohr fort vom Resonatorspiegel gerichtet und das in das Laserrohr zugeströmte Lasergas im Laserrohr radial nach außen auf eine spiralförmige Laufbahn zentrifugiert.

Die Hauptgasströmung im Laserrohr ist von den Resonatorspiegeln (Auskoppelspiegel, Umlenkspiegel und Rückspiegel) fortgerichtet, wobei sich Rückgasströmungen in Richtung auf die Resonatorspiegel nicht ganz vermeiden lassen. Im Lasergas vorhandene Partikel werden radial nach außen zentrifugiert und auf eine spiralförmige Laufbahn in den Wandbereich des Laserrohrs gezwungen, d.h. sie erhalten eine Bewegungskomponente senkrecht zur Hauptströmungsrichtung.

Partikel, die in entgegengesetzter Richtung auf den Resonatorspiegel zuströmen, werden erfindungsgemäß an der Lochblende umgelenkt und können wieder dem Hauptgasstrom zugeführt werden. Weiterhin bewirkt die Erfindung, dass im Volumen vor dem Resonatorspiegel die Strömungsgeschwindigkeiten wesentlich geringer sind, was die Wahrscheinlichkeit von "Einschüssen" auf dem Resonatorspiegel zusätzlich verringert. Im Ergebnis ist die Anzahl der auf den Resonatorspiegel auftreffenden Partikel oder Tröpfchen deutlich reduziert und der Schutz des Resonatorspiegels vor Verschmutzung verbessert.

Besonders wirksam und sinnvoll ist die Lochblende am Auskoppelspiegel, da der Auskoppelspiegel um eine Größenordnung empfindlicher gegen Verschmutzungen ist als die anderen Resonatorspiegel. Durch die Lochblende wird das Lasergas vor dem Resonatorspiegel auch strömungsberuhigt, was es ermöglicht, dass in das Volumen vor dem Resonatorspiegel (insbesondere dem Auskoppelspiegel) als zusätzlicher Schutzmechanismus noch frisches Lasergas zugeströmt werden kann.

Bei besonders bevorzugten Ausführungsformen der Erfindung weist die Lochblende einen sich von der Blendenöffnung in Richtung fort vom Resonatorspiegel erstreckenden Rohransatz auf, dessen Rohröffnung vorzugsweise koaxial zur Blendenöffnung und zum Laserrohr verläuft. Der Rohransatz bildet eine der Lochblende vorgeschaltete Rohrblende. Durch den Rohransatz wird erreicht, dass an der Lochblende umgelenkte Partikel dem Hauptgasstrom zugeführt werden.

In einer Weiterbildung dieser Ausführungsform ist zwischen Rohransatz und Innenwand des Laserrohrs ein in Richtung fort vom Resonatorspiegel offener Ringspalt ausgebildet.

Die Öffnungsdurchmesser der Lochblende und des Rohransatzes können gleich groß sein. Bevorzugt ist jedoch der Öffnungsdurchmesser des Rohransatzes größer als der Öffnungsdurchmesser der Blendenöffnung, so dass die im Rückgasstrom an der Innenwand des Rohransatzes strömenden Partikel an der Lochblende umgelenkt werden.

Zum Abführen der an der Rohrblende umgelenkten Partikel ist in einer ersten Ausführungsvariante axial zwischen Rohransatz und Lochblende ein Ringspalt vorgesehen, von dem ein im Rohransatz verlaufender Auslasskanal abgeht. In einer zweiten Ausführungsvariante weist die Innenwand des Rohransatzes in dem an die Lochblende grenzenden Bereich mindestens eine Wandöffnung auf, von der der Auslasskanal abgeht. Um die an der Blendenfläche auftreffenden Partikel in Richtung auf den Auslasskanal umzulenken, ist die dem Rohransatz zugewandte Blendenfläche der Lochblende vorteilhafterweise als Umlenkfläche ausgebildet.

Der Auslasskanal mündet vorzugsweise auf der dem Resonatorspiegel abgewandten Seite der Lochblende in den Innenraum des Laserrohrs, oder er ist durch eine im Laserrohr vorgesehene Wandöffnung aus dem Laserrohr herausgeführt. Der Rohransatz kann konstruktiv besonders vorteilhaft ein doppelwandiges Rohr sein, dessen ringförmiger Innenraum den Auslasskanal bildet.

Bei besonders bevorzugten Ausführungsformen der Erfindung ist die Lochblende in das Laserrohr eingesetzt. Diese Maßnahme hat den Vorteil, dass am Lasergasresonator keine konstruktiven Änderungen vorzunehmen sind und Lasergasresonatoren leicht nachgerüstet werden können. Die Rohrblende kann ein einstückiges Teil sein oder aus mehreren Einzelteilen zusammengesetzt sein.

Bei einer anderen Ausführungsform der Erfindung, die erfindungsgemäß auch in Alleinstellung vorgesehen sein kann, weist das Laserrohr zwischen Resonatorspiegel und Zufuhrleitung mindestens eine Wandöffnung auf, über welche die zentrifugierten Partikel nach außen aus dem Laserrohr herausgeleitet werden. In einer vorteilhaften Weiterbildung dieser Ausführungsform ist im Laserrohr zwischen Wandöffnung und Resonatorspiegel eine Lochblende angeordnet, um Partikel an der Lochblende zurückzuhalten und der Wandöffnung zuzuführen.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigen:
- Fig. 1: einen Ausschnitt des erfindungsgemäßen Gaslaserresonators im Bereich einer im Laserrohr angeordneten Lochblende für einen Umlenkspiegel;
- Fig. 2: eine Ausführungsvariante der in Fig. 1 gezeigten Lochblende;
- Fig. 3: eine weitere Ausführungsvariante einer Lochblende, die einer im Laserrohr vorgesehenen Wandöffnung zugeordnet ist; und
- Fig. 4: einen Ausschnitt des erfindungsgemäßen Gaslaserresonators im Bereich jeweils einer im Laserrohr angeordneten Lochblende für einen Auskoppelspiegel und einen Rückspiegel.

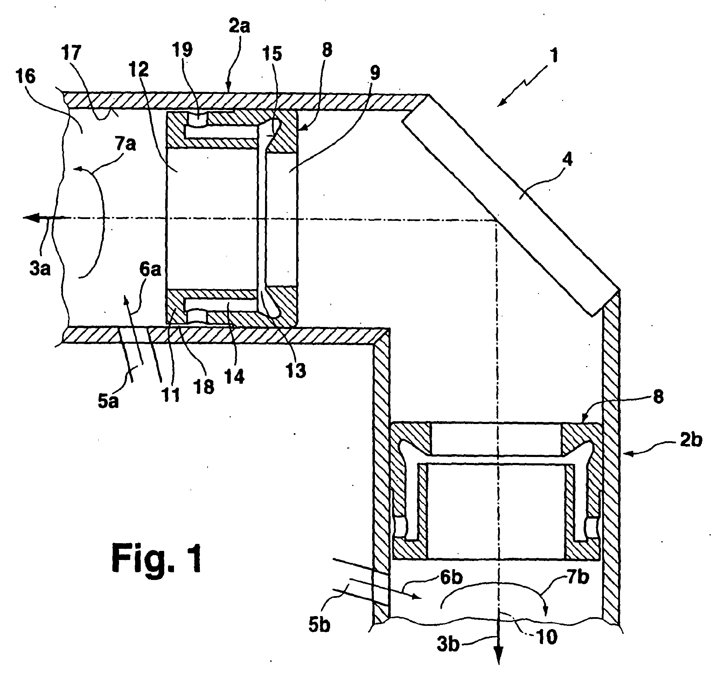

Der in **Fig. 1** gezeigte Gaslaserresonator **1** umfasst zwei runde Laserrohre **2a, 2b** die von einem Lasergas, z.B. CO₂, in Strömungsrichtung **3a**, **3b** durchströmt werden, einen endseitig der Laserrohre 2a, 2b angeordneten Resonatorspiegel **4,** der als Umlenkspiegel ausgebildet ist, sowie jeweils eine seitlich in das Laserrohr 2a, 2b mündende Zufuhrleitung **5a, 5b,** über die das Lasergas in das Laserrohr 2a, 2b in Richtung fort vom Resonatorspiegel 4 eingeleitet wird (Strömungspfeile **6a, 6b).** Dabei wird dem Lasergas durch eine außermittige Einströmbohrung (nicht gezeigt) eine Strömungskomponente **7a, 7b** senkrecht zur Hauptströmungsrichtung aufprägt. Zwischen Resonatorspiegel 4 und Zufuhrleitung 5a, 5b ist in das Laserrohr 2a, 2b jeweils eine Lochblende **8** eingesetzt, deren runde Blendenöffnung 9 koaxial zur Laserrohrachse **10** ausgerichtet ist. Der im Gaslaserresonator 1 erzeugte Laserstrahl verläuft parallel zu dieser Rohrachse 10.

Die Lochblende 8 weist einen sich von der Blendenöffnung 9 in Richtung fort vom Resonatorspiegel **4** erstreckenden Rohransatz **11** auf, dessen Rohröffnung **12** koaxial zur Laserrohrachse 10 verläuft. Der Durchmesser der Rohröffnung 12 ist größer als der Öffnungsdurchmesser der Blendenöffnung 9. Axial zwischen Lochblende 9 und Rohransatz 11 ist ein ringsum verlaufender Ringspalt **13** vorgesehen, von dem ein im Rohransatz 11 verlaufender ringförmiger Auslasskanal **14** abgeht. Die dem Rohransatz 11 zugewandte Blendenfläche **15** der Lochblende 8 ist als Umlenkfläche ausgebildet, die auf die Blendenfläche 15 auftreffendes Lasergas in den Auslasskanal 14 umlenkt. Der Auslasskanal 14 mündet auf der dem Resonatorspiegel 4 abgewandten Seite der Lochblende 8 in den Innenraum **16** des Laserrohrs 2a. Genauer gesagt, ist zwischen Innenwand **17** des Laserrohrs 2a und Rohransatz 11 ein sich in Strömungsrichtung 3a öffnender Ringspalt **18** vorgesehen, in den der Auslasskanal 14 über mehrere schlitzförmige Radialöffnungen **19** mündet, welche in der Außenwand des Rohransatzes 11 vorgesehen sind.

Im einströmenden Lasergas vorhandene Partikel werden radial nach außen zentrifugiert und strömen im Hauptgasstrom in Strömungsrichtung 3a. Allerdings lässt sich eine Rückgasströmung entgegen der Strömungsrichtung 3a, d.h. in Richtung auf den Resonatorspiegel 4, nicht ganz vermeiden. Partikel, die von dieser Rückgasströmung mitgerissen werden, werden entweder bereits stirnseitig am Rohransatz 11 umgelenkt oder strömen an der Innenwand des Rohransatzes 11 in Richtung Resonatorspiegel 4. An der in den öffnungsquerschnitt des Rohransatzes 11 hineinragenden Blendenfläche 15 werden die auftreffenden Partikel über den Ringspalt 13 in den Auslasskanal 14 umgelenkt, aus dem sie über die Radialöffnungen 19 und den Ringspalt 18 wieder dem Hauptgasstrom zugeführt werden.

Anders als in Fig. 1 gezeigt, ist bei anderen Ausführungsformen kein Ringspalt zwischen Rohransatz und Lochblende vorgesehen, sondern der Rohransatz erstreckt sich bis an die Rohrblende und weist an seiner Innenwand eine oder mehrere Umfangsöffnungen auf, von denen der Auslasskanal abgeht. Bei weiteren, nicht gezeigten Ausführungsformen ist der Auslasskanal durch eine Wandöffnung des Laserrohrs aus dem Laserrohr herausgeführt.

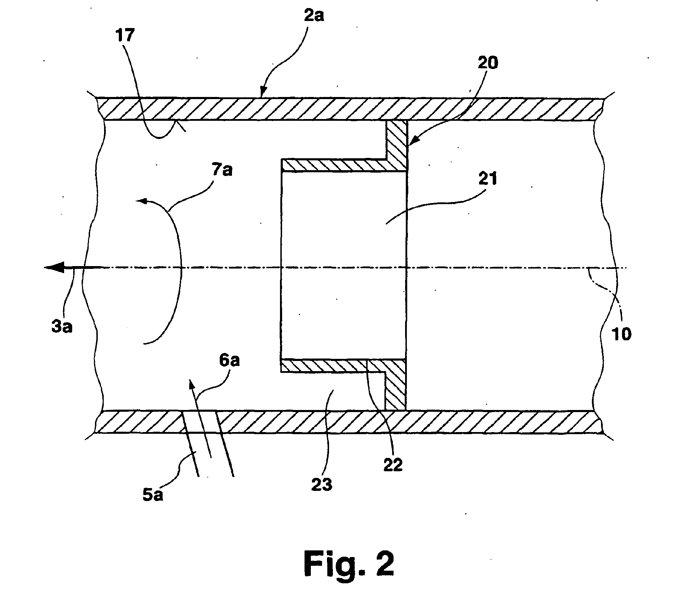

In **Fig. 2** ist eine andere Lochblende **20** zwischen Zufuhrleitung 5a und Resonatorspiegel (nicht gezeigt) in das Laserrohr 2a eingesetzt. Die Lochblende 20 weist wie in Fig. 1 einen sich von der Blendenöffnung **21** in Richtung fort vom Resonatorspiegel erstreckenden Rohransatz **22** auf, dessen Öffnungsdurchmesser dem der Blendenöffnung 21 entspricht. Mit anderen Worten ist die Lochblende 20 durch den Rohransatz 22 als Rohrblende ausgestaltet. Zwischen Rohransatz 22 und Innenwand 17 des Laserrohrs 2a ist ein in Richtung fort vom Resonatorspiegel offener Ringspalt **23** ausgebildet. Partikel, die von der Rückgasströmung mitgerissen werden, strömen in den Ringspalt 23 und werden darin an der Lochblende 20 in Strömungsrichtung 3a umgelenkt und so wieder dem Hauptgasstrom zugeführt.

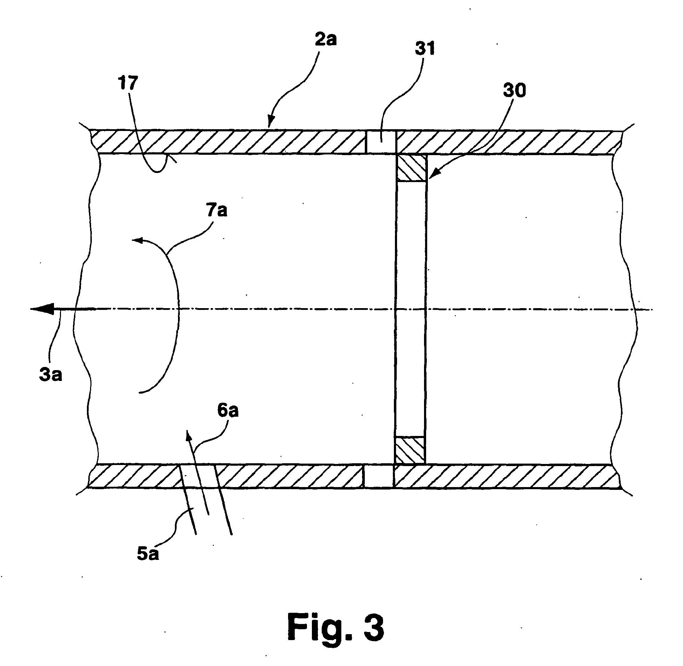

In **Fig. 3** ist eine Lochblende **30** zwischen Zufuhrleitung 5a und Resonatorspiegel (nicht gezeigt) in das Laserrohr 2a eingesetzt, und zwar, entgegen der Strömungsrichtung 3a, unmittelbar vor einer Wandöffnung 31 des Laserrohrs 2a. Radial nach außen zentrifugierte Partikel, die von der Rückgasströmung mitgerissen werden, strömen durch die Wandöffnung 31 entweder unmittelbar oder nach Umlenken an der Lochblende 30 aus. Zusätzlich kann an der Wandöffnung 31 ein Unterdruck zum Absaugen des an der Rohrinnenwand 17 entlangströmenden Lasergases angelegt sein.

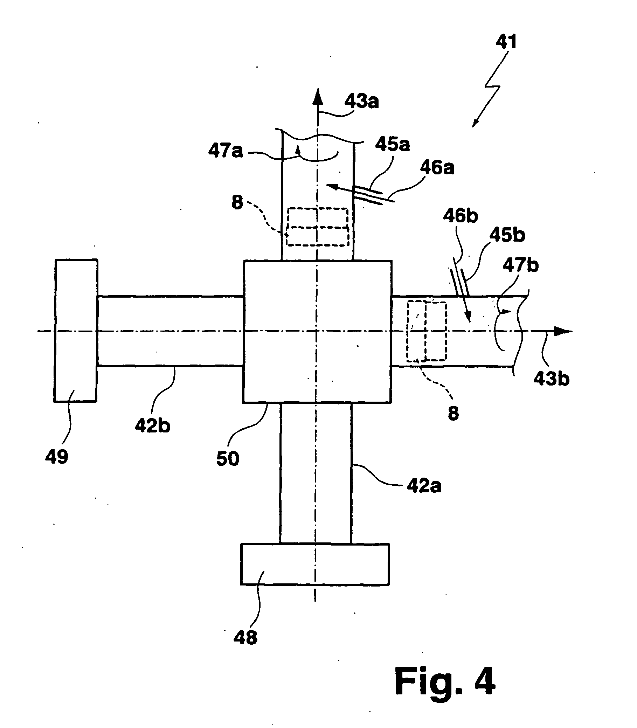

In **Fig. 4** ist ein Ausschnitt eines quadratisch gefalteten Gaslaserresonators **41** im Bereich eines Rückspiegels **48** und eines Auskoppelspiegels **49** gezeigt, die beide jeweils endseitig eines Laserrohrs **42a, 42b** angeordnet sind. Die beiden Laserrohre 42a, 42b sind über ein Eckgehäuse **50** miteinander verbunden. Am Auskoppelspiegel 49 wird der parallel zu den Rohrachsen verlaufende Laserstrahl aus dem Gaslaserresonator 41 ausgekoppelt. Auf den den Spiegeln 48, 49 abgewandten Seiten des Eckgehäuses 50 mündet jeweils eine Zufuhrleitung **45a, 45b** in die Laserrohre 42a, 42b, über die das Lasergas in die Laserrohre 42a, 42b in Richtung jeweils fort vom Rück- und Auskoppelspiegel 48, 49 eingeleitet wird (Strömungspfeile **46a, 46b).** Dem in das Laserrohr **42a, 42b** zugeströmten Lasergas wird eine Strömungskomponente **47a, 47b** senkrecht zur Hauptströmungsrichtung (Strömungspfeile **43a, 43b)** aufprägt. Zwischen dem Eckgehäuse 50 und den Zufuhrleitungen 45a, 45b ist in die Laserrohre 42a, 42b jeweils eine Lochblende 8 eingesetzt, um Partikel, die entgegen der Hauptströmungsrichtung 43a, 43b auf den Rück- bzw. Auskoppelspiegel 48, 49 zuströmen, umzulenken und wieder dem Hauptgasstrom zuzuführen.

## Patentansprüche

1. Gaslaserresonator (1; 41) mit wenigstens einem von Lasergas in einer zur optischen Achse parallelen Hauptströmungsrichtung (3a, 3b) durchströmten Laserrohr (2a, 2b; 42a, 42b), mit wenigstens einer in das Laserrohr (2a, 2b; 42a, 42b) mündenden Zufuhrleitung (5a, 5b; 45a, 45b) für das Lasergas und mit wenigstens einem endseitig des Laserrohrs (2a, 2b; 42a, 42b) angeordneten Resonatorspiegel (4: 48, 49), wobei das in das Laserrohr (2a, 2b; 42a, 42b) zugeströmte Lasergas im Laserrohr (2a, 2b; 42a, 42b) in Hauptströmungsrichtung (3a, 3b) fort vom Resonatorspiegel (4; 48, 49) gerichtet und radial nach außen auf eine spiralförmige Laufbahn zentrifugiert ist,
**dadurch gekennzeichnet,**
**dass** im Laserrohr (2a, 2b; 42a, 42b) zwischen Resonatorspiegel (4; 48, 49) und Zufuhrleitung (5a, 5b; 45a, 45b) eine Lochblende (8; 20; 30) angeordnet ist, an der im Lasergas vorhandene, radial nach außen zentrifugierte Partikel, welche entgegen der Hauptströmungsrichtung (3a, 3b) strömen, umgelenkt werden.

2. Gaslaserresonator nach Anspruch 1, **dadurch gekennzeichnet, dass** die Lochblende (8; 20) einen sich von der Blendenöffnung (9; 21) in Richtung fort vom Resonatorspiegel (4; 48, 49) erstreckenden Rohransatz (11; 22) aufweist.

3. Gaslaserresonator nach Anspruch 2, **dadurch gekennzeichnet, dass** zwischen Rohransatz (11; 22) und Innenwand (17) des Laserrohrs (2a, 2b; 42a, 42b) ein in Richtung fort vom Resonatorspiegel (4; 48, 49) offener Ringspalt (18; 23) ausgebildet ist.

4. Gaslaserresonator nach Anspruch 2 oder 3, **dadurch gekennzeichnet, dass** der Öffnungsdurchmesser des Rohransatzes (11; 22) mindestens so groß wie der Öffnungsdurchmesser der Blendenöffnung (9; 21), vorzugsweise größer, ist.

5. Gaslaserresonator nach einem der Ansprüche 2 bis 4, **dadurch gekennzeichnet, dass** axial zwischen Rohransatz (11) und Lochblende (8) ein Ringspalt (13) vorgesehen ist, von dem ein im Rohransatz (11) verlaufender Auslasskanal (14) abgeht.

6. Gaslaserresonator nach einem der Ansprüche 2 bis 4, **dadurch gekennzeichnet, dass** die Innenwand des Rohransatzes (11) in dem an die Lochblende (8) grenzenden Bereich mindestens eine Wandöffnung aufweist, von der ein im Rohransatz (11) verlaufender Auslasskanal (14) abgeht.

7. Gaslaserresonator nach Anspruch 5 oder 6, **dadurch gekennzeichnet, dass** die dem Rohransatz (11) zugewandte Blendenfläche (15) der Lochblende (8) als Umlenkfläche ausgebildet ist, die das an der Blendenfläche (15) auftreffende Lasergas in Richtung auf den Auslasskanal (14) umlenkt.

8. Gaslaserresonator nach einem der Ansprüche 5 bis 7, **dadurch gekennzeichnet, dass** der Auslasskanal (14) auf der dem Resonatorspiegel (4; 48, 49) abgewandten Seite der Lochblende (8) in den Innenraum (16) des Laserrohrs (2a, 2b; 42a, 42b), insbesondere in einen zwischen Laserrohr (2a, 2b; 42a, 42b) und Rohransatz (11) vorgesehenen Ringspalt (18), mündet.

9. Gaslaserresonator nach einem der Ansprüche 5 bis 7, **dadurch gekennzeichnet, dass** der Auslasskanal (14) durch eine im Laserrohr (2a, 2b; 42a, 42b) vorgesehene Wandöffnung aus dem Laserrohr (2a, 2b; 42a, 42b) herausgeführt ist.

10. Gaslaserresonator nach einem der vorhergehenden Ansprüche, **dadurch gekennzeichnet, dass** die Lochblende (8; 20; 30) in das Laserrohr (2a, 2b; 42a, 42b) eingesetzt ist.

11. Gaslaserresonator nach einem der vorhergehenden Ansprüche, **dadurch gekennzeichnet, dass** das Laserrohr (2a) zwischen Resonatorspiegel (4; 48, 49) und Zufuhrleitung (5a) mindestens eine Wandöffnung (31) aufweist.

12. Gaslaserresonator nach Anspruch 11, **dadurch gekennzeichnet, dass** im Laserrohr (2a) zwischen Wandöffnung (31) und Resonatorspiegel (4; 48, 49) eine Lochblende (30) angeordnet ist.

## Claims

1. Gas laser resonator (1; 41) with at least one laser tube (2a, 2b; 42a, 42b), through which laser gas flows in a main direction of flow (3a, 3b) which is parallel to the optical axis, with at least one feed line (5a, 5b; 45a, 45b), which leads into the laser tube (2a, 2b; 42a, 42b), for the laser gas and with at least one resonator mirror (4; 48, 49) disposed at the end of the laser tube (2a, 2b; 42a, 42b), wherein the laser gas flowing into the laser tube (2a, 2b; 42a, 42b) is directed in the laser tube (2a, 2b; 42a, 42b) in the main direction of flow (3a, 3b) away from the resonator mirror (4; 48, 49) and centrifuged radially outwards into a spiral path,
**characterised in**
**that** an apertured diaphragm (8; 20; 30) is disposed in the laser tube (2a, 2b; 42a, 42b) between the resonator mirror (4; 48, 49) and the feed line (5a, 5b; 45a, 45b), at which diaphragm the particles in the laser gas which are centrifuged radially outwards and flow against the main direction of flow (3a, 3b) are deflected.

2. Gas laser resonator according to Claim 1, **characterised in that** the apertured diaphragm (8; 20) comprises a socket (11; 22) which extends from the diaphragm opening (9; 21) in the direction away from the resonator mirror (4; 48, 49).

3. Gas laser resonator according to Claim 2, **characterised in that** an annular gap (18; 23), which is open in the direction away from the resonator mirror (4; 48, 49), is formed between the socket (11; 22) and the inner wall (17) of the laser tube (2a, 2b; 42a, 42b).

4. Gas laser resonator according to Claim 2 or 3, **characterised in that** the opening diameter of the socket (11; 22) is at least as large as the opening diameter of the diaphragm opening (9; 21), preferably larger.

5. Gas laser resonator according to any one of Claims 2 to 4, **characterised in that** an annular gap (13) is provided axially between the socket (11) and the apertured diaphragm (8), from which gap an outlet channel (14) extending in the socket (11) starts.

6. Gas laser resonator according to any one of Claims 2 to 4, **characterised in that**, in the region adjoining the apertured diaphragm (8), the inner wall of the socket (11) comprises at least one wall opening from which an outlet channel (14) extending in the socket (11) starts.

7. Gas laser resonator according to Claim 5 or 6, **characterised in that** the diaphragm surface (15) of the apertured diaphragm (8) which faces the socket (11) is formed as a deflection surface which deflects the laser gas striking the diaphragm surface (15) in the direction of the outlet channel (14).

8. Gas laser resonator according to any one of Claims 5 to 7, **characterised in that**, on the side of the apertured diaphragm (8) which is remote from the resonator mirror (4; 48, 49), the outlet channel (14) leads into the interior space (16) of the laser tube (2a, 2b; 42a, 42b), in particular into an annular gap (18) which is provided between the laser tube (2a, 2b; 42a, 42b) and the socket (11).

9. Gas laser resonator according to any one of Claims 5 to 7, **characterised in that** the outlet channel (14) is routed out of the laser tube (2a, 2b; 42a, 42b) through a wall opening which is provided in the laser tube (2a, 2b; 42a, 42b).

10. Gas laser resonator according to any one of the preceding Claims, **characterised in that** the apertured diaphragm (8; 20; 30) is inserted in the laser tube (2a, 2b; 42a, 42b).

11. Gas laser resonator according to any one of the preceding Claims, **characterised in that** the laser tube (2a) comprises at least one wall opening (31) between the resonator mirror (4; 48, 49) and the feed line (5a).

12. Gas laser resonator according to Claim 11, **characterised in that** an apertured diaphragm (30) is disposed in the laser tube (2a) between the wall opening (31) and the resonator mirror (4; 48, 49).

## Revendications

1. Résonateur de laser à gaz (1 ; 41) comprenant au moins un tube laser (2a, 2b ; 42a, 42b) parcouru par un gaz laser dans un sens d'écoulement principal (3a, 3b) parallèle à l'axe optique, au moins un conduit d'amenée (5a, 5b; 45a, 45b) du gaz laser qui débouche dans le tube laser (2a, 2b ; 42a, 42b) et au moins un miroir de résonateur (4 ; 48, 49) disposé à une extrémité du tube laser (2a, 2b ; 42a, 42b), le gaz laser amené dans le tube laser (2a, 2b ; 42a, 42b) étant centrifugé en éloignement du miroir de résonateur (4 ; 48, 49) dans le sens d'écoulement principal (3a, 3b) et radialement vers l'extérieur sur une trajectoire en spirale dans le tube laser (2a, 2b ; 42a, 42b),
**caractérisé en ce**
**que** dans le tube laser (2a, 2b ; 42a, 42b), entre le miroir de résonateur (4 ; 48, 49) et le conduit d'amenée (5a, 5b ; 45a, 45b), est disposé un diaphragme à trou (8 ; 20 ; 30) sur lequel les particules présentes dans le gaz laser, centrifugées radialement vers l'extérieur, qui s'écoulent à l'opposé du sens d'écoulement principal (3a, 3b), sont déviées.

2. Résonateur de laser à gaz selon la revendication 1, **caractérisé en ce que** le diaphragme à trou (8 ; 20) présente une tubulure (11 ; 22) qui s'étend depuis l'ouverture de diaphragme (9 ; 21) dans le sens opposé au miroir de résonateur (4 ; 48, 49).

3. Résonateur de laser à gaz selon la revendication 2, **caractérisé en ce qu'**une fente annulaire (18 ; 23) ouverte dans le sens opposé au miroir de résonateur (4 ; 48, 49) est formée entre la tubulure (11 ; 22) et la paroi intérieure (17) du tube laser (2a, 2b; 42a, 42b).

4. Résonateur de laser à gaz selon la revendication 2 ou 3, **caractérisé en ce que** le diamètre d'ouverture de la tubulure (11 ; 22) est au moins aussi grand que le diamètre d'ouverture de l'ouverture de diaphragme (9 ; 21), de préférence plus grand.

5. Résonateur de laser à gaz selon l'une des revendications 2 à 4, **caractérisé en ce qu'**une fente annulaire (13) est prévue axialement entre la tubulure (11) et le diaphragme à trou (8), de laquelle part un canal de sortie (14) qui s'étend dans la tubulure (11).

6. Résonateur de laser à gaz selon l'une des revendications 2 à 4, **caractérisé en ce que** la paroi intérieure de la tubulure (11) présente dans la zone attenante au diaphragme à trou (8) au moins une ouverture de paroi de laquelle part un canal de sortie (14) qui s'étend dans la tubulure (11).

7. Résonateur de laser à gaz selon la revendication 5 ou 6, **caractérisé en ce que** la surface de diaphragme (15) du diaphragme à trou (8) tournée vers la tubulure (11) est conçue comme une surface de déviation qui dévie le gaz laser qui atteint la surface de diaphragme (15) en direction du canal de sortie (14).

8. Résonateur de laser à gaz selon l'une des revendications 5 à 7, **caractérisé en ce que** le canal de sortie (14) débouche dans l'intérieur (16) du tube laser (2a, 2b ; 42a, 42b) du côté du diaphragme à trou (8) opposé au miroir de résonateur (4; 48, 49), en particulier dans une fente annulaire (18) prévue entre le tube laser (2a, 2b ; 42a, 42b) et la tubulure (11).

9. Résonateur de laser à gaz selon l'une des revendications 5 à 7, **caractérisé en ce que** l'on fait sortir le canal de sortie (14) du tube laser (2a, 2b; 42a, 42b) par une ouverture de paroi prévue dans le tube laser (2a, 2b ; 42a, 42b).

10. Résonateur de laser à gaz selon l'une des revendications précédentes, **caractérisé en ce que** le diaphragme à trou (8 ; 20 ; 30) est inséré dans le tube laser (2a, 2b ; 42a, 42b).

11. Résonateur de laser à gaz selon l'une des revendications précédentes, **caractérisé en ce que** le tube laser (2a) présente au moins une ouverture de paroi (31) entre le miroir de résonateur (4; 48, 49) et le conduit d'amenée (5a).

12. Résonateur de laser à gaz selon la revendication 11, **caractérisé en ce qu'**un diaphragme à trou (30) est disposé entre l'ouverture de paroi (31) et le miroir de résonateur (4 ; 48, 49) dans le tube laser (2a).
